# EUROPÄISCHE PATENTSCHRIFT

(11) **EP 1 507 093 B1**
(45) Veröffentlichungstag und Bekanntmachung des Hinweises auf die Patenterteilung: **08.10.2008**
(21) Anmeldenummer: 04018311.3
(22) Anmeldetag: 03.08.2004
(51) Int. Cl.: F16D 66/02, F16D 66/00

(54) **Scheibenbremsanordnung mit Reibbelag-Verschleisssensor**
Disc brake with friction lining wear sensor
Frein à disque avec témoin d'usure de garniture de friction

(30) Priorität: 11.08.2003 DE 10337124
(43) Veröffentlichungstag der Anmeldung: 16.02.2005
(73) Patentinhaber: TMD Friction Services GmbH, 51381 Leverkusen (DE); BPW Bergische Achsen KG, 51674 Wiehl (DE)
(72) Erfinder: Hogenkamp, Wolfgang, 42855 Remscheid (DE); Komor, Henryk, 51375 Leverkusen (DE); Schlinge, Berthold, 48703 Stadtlohn (DE); Brecht, Jörg, Dr., 51519 Odenthal (DE); Zimmermann, Jörg, 51061 Köln (DE); Köchl, Hans-Ulrich, 51674 Wiehl (DE); Dohle, Achim, 51375 Leverkusen (DE); Rothmann, Werner, 45134 Essen (DE); Braunöhler, Udo, 51674 Wiehl (DE)
(74) Vertreter: Müller, Eckhard

(56) Entgegenhaltungen:
- EP-A- 0 304 565
- DE-A1- 2 258 050
- DE-A1- 3 034 737
- DE-A1- 4 021 568
- DE-C1- 4 301 129
- GB-A- 1 394 822
- US-A- 3 674 114
- US-A- 4 183 012
- US-A- 5 637 794
- US-A- 5 692 585
- PATENT ABSTRACTS OF JAPAN Bd. 006, Nr. 233 (P-156), 19. November 1982 (1982-11-19) & JP 57 135302 A (MATSUSHITA DENKI SANGYO KK; others: 01), 20. August 1982 (1982-08-20)

## Beschreibung

Die Erfindung betrifft eine Scheibenbremsanordnung mit einer Bremsscheibe und einem Bremssattel mit zwei auf die Bremsscheibe einwirkenden Bremsbelägen, die jeweils einen auf einem Belagträger aufgebrachten Reibbelag mit einer Reibseite umfassen, und einem Bremssattelgehäuseelement, wobei zwischen einer mit dem Belagträger verbundenen und der Bremsscheibe zugewandten Oberfläche und der Reibseite des Reibbelags zugewandten Oberfläche der Bremsscheibe ein den Verschleiß des Reibbelags erfassender elektro-mechanischer Verschleißsensor angeordnet ist.

Reibbeläge nutzen sich naturgemäß bei jedem Bremsvorgang ab, so daß es nach einiger Zeit des Betriebs erforderlich ist, die Bremsbeläge, das heißt Belagträger mit darauf aufgebrachten Reibbelägen, auszutauschen, um das weitere, ordnungsgemäße Funktionieren der Bremsen zu gewährleisten. Wirtschaftlich vorteilhaft ist es, den Bremsbelag zum richtigen Zeitpunkt einer vorgegebenen maximalen Abnutzung auszuwechseln. Wird der Bremsbelag zu früh, das heißt nach einer zu geringen Laufzeit, ausgewechselt, erhöht dies die Kosten. Wird der Bremsbelag zu spät gewechselt, kann es zu Fehlfunktionen der Bremse mit den damit verbundenen Gefahren kommen. Es ist somit erwünscht, den Bremsbelag dann auszuwechseln, wenn die Abnutzung bzw. der Verschleiß die Dicke des Reibbelags auf ein vorgegebenes Maß gemindert hat.

Um den richtigen Zeitpunkt des Auswechselns der Bremsbeläge zu erfassen, gibt es beispielsweise Vorrichtungen an Bremsbelägen, die ein akustisches Signal während des Bremsvorgangs erzeugen, wenn die Bremse eine ein Austauschen eines Bremsbelags erfordernde Abnutzung erreicht hat. Unter bestimmten Einsatzbedingungen, beispielsweise bei großen Lastkraftwagen, sind akustische Verschleißanzeigen jedoch nicht ausreichend, da die von diesen Einrichtungen erzeugten akustischen Signale oftmals aufgrund der störenden Betriebsgeräusche nicht oder nicht rechtzeitig wahrgenommen werden. In solchen Fällen bieten sich elektro-mechanische Verschleißsensoren an, die dann, wenn der Reibbelag eine vorgegeben Abnutzung erreicht hat, ein elektrisches Ausgangssignal erzeugen können, was weiterverarbeitet und in eine Betriebsanzeige für den Fahrer umgewandelt werden kann.

Derartige Verschleißsensoren sind beispielsweise aus dem US-Patent Nr. 4,520,661 bekannt. Beispielsweise ist es bekannt, eine von einem Strom durchflossene Drahtschleife oder Leiterschleife derart in einen Bremsbelag einzubringen, daß ein Abschnitt der Leiterschleife durch eine Belagträgerplatte hindurchgeführt ist und in das Reibbelagmaterial hineinreicht, wobei das Ende der Leiterschleife bis in diejenige Ebene hineinragt, bis zu welcher der Reibbelag maximal abgenutzt werden soll. Wenn dann der Reibbelag während des Betriebs abgerieben wird, dringt die Oberfläche des Reibbelags langsam bis in die Ebene der Leiterschleife vor, so daß schließlich die Leiterschleife freigelegt und dann ebenfalls abgerieben und dabei durchtrennt wird. Daraus sowie aus der zuvor bewirkten Freilegung der Leiterschleife können Signale abgeleitet werden, die das Erreichen eines maximalen Verschleißes des Reibbelags anzeigen. Ein derartiger Sensor wird in eine für diesen Zweck vorgesehene Öffnung des Belagträgers montiert. Zur Aufnahme eines solchen Verschleißsensors sind die Bremsbeläge somit speziell hergerichtet.

Bei einer alternativen Ausführungsform wird der Verschleiß der Bremsbeläge und der Bremsscheibe summarisch durch Erfassen des sich entsprechend verlängerten Stellwegs des Bremskolbens erfaßt. Entsprechende Sensoren sind an vorgegebenen Stellen des Kolbengehäuses montiert, wie es in dem oben genannten US-Patent Nr. 4,520,661 beschrieben ist. Diese bekannten Verschleißsensoren haben den Nachteil, daß sie grundsätzlich nur den summarischen Verschleiß beider Bremsbeläge und der Bremsscheibe erfassen können.

Aus dem US-Patent Nr. 4,183,012 ist eine elektromechanische Verschleißanzeige bekannt, bei der ein eine Leiterschleife enthaltender Sensor in eine dafür vorgesehene Aussparung eines Bremsbelags und seiner Trägerplatte eingesetzt ist, wobei mit Hilfe einer sich an einem Gehäuseelement abstützenden Feder ein an dem Sensor angeformter Vorsprung derart gegen die Trägerplatte des Bremsbelags gedrückt wird, daß der Sensor in seiner Lage an der Trägerplatte fixiert wird.

Aus der DE 30 34 737 A1 ist es bekannt, einen mit einer isolierenden Ummantelung versehenen Draht zur Verschleißanzeige an einem mit einem Bremsbelag verbundenen Gehäuseteil zu befestigen und in eine Nut des Bremsbelags hineinragen zu lassen. Diese Anordnung eignet sich nur für Schwimmsattel-Bremsen, bei denen dieser eine Bremsbelag gegenüber dem den Sensordraht haltenden Gehäuseteil nicht bewegt wird. Der Sensor ist somit praktisch am Bremsbelag befestigt.

Auch die US 5,692,585 zeigt einen an einem Bremsbelag befestigten Drahtschleifen-Verschleißsensor.

Aus der deutschen Offenlegungsschrift 2 258 050 ist es bekannt, einen mit einer isolierenden Umhüllung versehenen Federdrahtbügel zwischen den beiden Trägerplatten der einander gegenüberliegenden Bremsbeläge einzuspannen, wobei jeweils ein Ende des isolierenden Federdrahtbügels in einer Regennut des Bremsbelags liegt und gegen deren Grundfläche drückt. Der Scheitel des Federdrahtbügels ist etwa in der Mitte zwischen den Bremsbelägen oberhalb der Bremsscheibe um einen Haltestift herumgelegt und drückt gegen eine Gehäusewand.

Aufgabe der Erfindung ist es, eine einfache Verschleißanzeige für Scheibenbremsanordnungen der eingangs genannten Art zu schaffen, die bei einer Vielzahl von Scheibenbremsanordnungen nachrüstbar ist und den individuellen Verschleiß der einzelnen Bremsbeläge erfassen kann.

Diese Aufgabe wird durch eine Scheibenbremsanordnung mit den Merkmalen des Patentanspruchs 1 gelöst.

Erfindungsgemäß wird bei einer Scheibenbremsanordnung der eingangs genannten Art der Verschleißsensor an dem Bremssattelgehäuseelement derart befestigt, daß er mit einem Sensorkopf in einen Zwischenraum zwischen der mit dem Belagträger verbundenen und der Bremsscheibe zugewandten Oberfläche und der der Reibseite des Reibbelags zugewandten Oberfläche der Bremsscheibe eintaucht. Der Sensorkopf nimmt dabei eine vorgegebene Ausdehnung in Zuspannrichtung ein, so daß der Sensorkopf während des Bremsvorgangs von der mit dem Belagträger verbundenen und der Bremsscheibe zugewandten Oberfläche gegen die der Reibseite des Reibbelags zugewandte Oberfläche der Bremsscheibe gedrückt wird, sobald der Verschleiß des Reibbelags ein erstes Maß erreicht hat. Das Bremssattelgehäuseelement, an dem der Verschleißsensor befestigt ist, kann ein beliebiges Element des gesamten Bremssattels sein, das sich in einer Position befindet, von der aus der Verschleißsensor mit seinem Sensorkopf in den Zwischenraum eintauchen kann. Vorzugsweise wird somit ein Element des Bremssattelgehäuses benutzt, welches sich in unmittelbarer Nähe des Zwischenraums und vorzugsweise in radialer Richtung der Bremsscheibe unmittelbar außerhalb des Spalts zwischen Belagträger und Bremsscheibe befindet. Der Verschleißsensor ist beispielsweise an einem die Bremsbeläge und die Bremsscheibe übergreifenden Bügel befestigt, mit dem üblicherweise die Haltefedern der Bremsbeläge angedrückt werden. Der Sensorkopf wird somit in dem Zwischenraum gehalten und erst dann von dem Bremsbelag gegen die Bremsscheibe gedrückt, wenn der Verschleiß des Reibbelags ein erstes Maß erreicht hat. Sobald dies der Fall ist, wird die der Bremsscheibe zugewandte Oberfläche des Sensorkopfes bei jedem Bremsvorgang zusammen mit dem Reibbelag abgerieben. Das den Verschleiß anzeigende Sensorsignal kann auf vielfältige Weise erzeugt werden und bereits durch das bloße Andrücken des Sensorkopfs an die Bremsscheibe (das Berühren der Bremsscheibe) oder durch ein bestimmtes Maß des Abreibens des Sensorkopfs erzeugt werden. Die vorgegebene Ausdehnung des Sensorkopfs in der Richtung quer zu der Oberfläche der Bremsscheibe (Zuspannrichtung) bestimmt somit das Maß des Verschleißes, bei dem der Sensorkopf erstmalig die Bremsscheibenoberfläche berührt. Aus diesem Grund wird der Sensorkopf auch als "Distanzelement" bezeichnet. Die erfindungsgemäße Scheibenbremsanordnung hat viele Vorteile: Der Verschleißsensor registriert den Verschleiß des ihm zugeordneten Reibbelags unabhängig vom Verschleiß-Zustand der Bremsscheibe. Der Verschleißsensor kann nachträglich ohne konstruktive Veränderungen am Bremsbelag oder der Bremse eingebaut werden; der Einbau kann somit einfach während der Bremsenmontage oder in einer Werkstatt (auch nachträglich) durchgeführt werden. Sollte der Fall eintreten, daß ein Bremsbelag ausgewechselt wird, bevor der Verschleißsensor teilweise abgerieben worden ist, so ist eine Wiederverwendung der Verschleißsensors beim neuen Bremsbelag möglich.

Der Sensorkopf ist über eine flexible Sensorhalterung an dem Bremssattelgehäuseelement befestigt. Die flexible Sensorhalterung ermöglicht es, daß der Sensorkopf, während er in den Zwischenraum eintaucht, der Bewegung des Bremsbelags bzw. des Belagträgers nachgeführt wird. Darüber hinaus wird die genaue Positionierung des Verschleißsensors bei seiner Befestigung an dem Bremssattelgehäuseelement weniger kritisch. Die flexible Sensorhalterung umfaßt beispielsweise einen biegeelastischen Stab oder flexiblen Draht, der an seinem einen Ende an dem Bremssattelgehäuseelement befestigt (beispielsweise fest eingespannt oder angeklemmt) ist und an seinem anderen Ende den Sensorkopf trägt.

Bei einer bevorzugten Ausführungsform ist der Verschleißsensor an dem Bremssattelgehäuseelement derart befestigt, daß der Sensorkopf in einer vorgegebenen Orientierung zur Bremsscheibe gehalten wird. Beispielsweise ist der Sensorkopf verdrehsicher befestigt, so daß seine Abmessungen in zuspannrichtung, d.h. senkrecht zur Oberfläche der Bremsscheibe, das erste Maß des Verschleißes bestimmen, ab dem der Sensorkopf an die Bremsscheibenoberfläche gepreßt wird. Eine derartige Anordnung in einer vorgegebenen Orientierung gestattet es außerdem, die der Bremsscheibe zugewandte Seite des Sensorkopfs speziell so herzurichten, daß eine einfache Erfassung des Kontakts zur Bremsscheibe und/oder des Abriebs der Oberfläche des Sensorkopfs erfaßt werden kann. Damit der Sensorkopf in der vorgegebenen Orientierung gehalten werden kann, ist es bei einer vorteilhaften Weiterbildung vorgesehen, daß der Sensorkopf in eine Ausnehmung des Reibbelags eintaucht, in der er verdrehsicher geführt wird.

Der Sensorkopf kann sich grundsätzlich in einem beliebigen Zwischenraum zwischen einer mit dem Belagträger verbundenen Oberfläche und der Oberfläche der Bremsscheibe befinden. Beispielsweise kann dies ein Zwischenraum zwischen einem Abschnitt, in dem der Belagträger (die Belagträgerplatte) über den Reibbelag vorsteht, und der gegenüberliegend angeordneten Bremsscheibenoberfläche sein. Bei einer bevorzugten Ausbildung der erfindungsgemäßen Scheibenbremsanordnung taucht der Sensorkopf jedoch in eine vorhandene Ausnehmung des Reibbelags ein. Dies kann jede Ausnehmung sein, die aus einer Richtung quer zur Zuspannrichtung des Bremsbelags zugänglich ist, insbesondere jede Ausnehmung in einer seitlichen Wandung des Reibbelags. Beispielsweise kann die Ausnehmung eine seitlich in den Reibbelag eingebrachte Bohrung sein, wobei in diesem Fall die belagträgerseitige Begrenzungsfläche der Bohrung die mit dem Belagträger verbundene und der Bremsscheibe zugewandte Oberfläche bildet, an der sich der Sensorkopf belagträgerseitig abstützt, sobald er nach Erreichen des ersten Maßes des Verschleißes des Reibbelags auf seiner gegenüberliegenden Seite mit der Bremsscheibenoberfläche in Berührung kommt.

Vorzugsweise wird die Ausnehmung von einer den Reibbelag in seiner gesamten Dicke durchlaufenden Nut gebildet, wobei die Nut auf der einen Seite vom Belagträger begrenzt und auf der gegenüberliegenden Seite offen ist. Es sind aber auch Fälle denkbar, in denen die Länge der Nut nur einen Teil der Reibbelagdicke ausmacht. In dem Fall, daß die Ausnehmung von einer Nut gebildet wird, ist vorzugsweise die Breite des Sensorkopfs (quer zur Zuspannrichtung) an die Breite der Nut angepaßt, so daß die Wandungen der Nut Führungsflächen für den Sensorkopf bilden. Bei einer bevorzugten Weiterbildung erweitert sich die Nut zum Boden hin und ist das Querschnittsprofil des Verschleißsensorkopfs derart an die Form der Nut angepaßt, daß der Sensorkopf nur in Längsrichtung der Nut bewegt werden kann.

Der Sensorkopf kann bei einer einfachen Ausführungsform beispielsweise eine mit einer elektrischen Zuleitung verbundene metallische Oberfläche aufweisen, so daß über die Zuleitung ein Signal erzeugt werden kann, wenn die metallische Oberfläche des Sensorkopfs die Bremsscheibe berührt. In diesem Fall wäre es ggf. erforderlich, die den Sensorkopf umgebenden Bereiche des Bremsbelags mit einem elektrisch isolierenden Material zu versehen. Bei einer bevorzugten Ausführungsform jedoch weist der Sensorkopf einen der Bremsscheibe zugewandten Bereich auf, der während des Bremsvorgangs durch einen Kontakt zu der Bremsscheibe abgerieben wird, nachdem der Verschleiß des Reibbelags das erste Maß erreicht hat. Dieser Abrieb des Sensorkopfs wird dann von dem Verschleißsensor erfaßt. Vorzugsweise ändert sich eine erfaßbare Sensoreigenschaft aufgrund des Abreibens des Bereichs, wenn der Verschleiß des Reibbelags ein zweites Maß erreicht hat. Das zweite Maß kann gleich dem ersten Maß sein, was bedeutet, daß sich die erfaßbare Sensoreigenschaft sofort ändert, wenn das Abreiben des Bereichs einsetzt. Dies ist beispielsweise bei einer Sensoranordnung der Fall, bei der der Bereich eine metallische Oberfläche aufweist, die über eine Zuleitung mit einer Spannung beaufschlagt wird, wobei sich der Stromfluß durch den Verschleißsensor ändert, sobald die metallische Oberfläche des Bereichs die Bremsscheibenoberfläche berührt.

Bei einer bevorzugten Ausbildung der Scheibenbremsanordnung sind jedoch das erste und das zweite Maß verschieden, so daß sich die erfaßbare Sensoreigenschaft erst ändert, wenn der Bereich des Verschleißsensors um ein vorgegebenes Maß ( = Differenz zwischen dem ersten und dem zweiten Maß) abgerieben ist. Bei dieser Ausführungsform kann die erfaßbare Sensoreigenschaft beispielsweise ein zwischen zwei Anschlüssen des Verschleißsensors meßbarer Widerstand sein. Vorzugsweise weist der Sensorkopf in diesem Fall eine von einer Isolatorschicht umhüllte Leiterschleife auf, wobei die Leiterschleife so angeordnet ist, daß zunächst die Isolatorschicht abgerieben wird, nachdem der Verschleiß das erste Maß erreicht hat, und dann ein Teil der Leiterschleife abgerieben und dadurch schließlich unterbrochen wird, nachdem der Verschleiß das zweite Maß erreicht hat. Diese Anordnung ist insbesondere deshalb vorteilhaft, weil sie eine mehrstufige Erfassung des Verschleißes gestattet. Wenn der der Bremsscheibe zugewandte Bereich des Sensorkopfs so weit abgerieben ist, daß die Leiterschleifenoberfläche freiliegt, kann dies durch eine Messung eines Stromflusses zwischen der Leiterschleife und der Bremsscheiben erfaßt werden. Wenn anschließend ein Abschnitt der Leiterschleife im Bereich des Sensorkopfs durch Abschleifen abgedünnt wird, so erhöht sich der elektrische Widerstand der Leiterschleife, was ebenfalls erfaßbar ist. Schließlich wird die Leiterschleife durchtrennt, so daß der Stromfluß durch die Leiterschleife unterbrochen wird, was die letzte Stufe der Verschleißerfassung darstellt. Eine bevorzugte Weiterbildung dieser Anordnung ist dadurch gekennzeichnet, daß der Sensorkopf wenigstens eine weitere Leiterschleife aufweist, die so angeordnet ist, daß ein Teil der weiteren Leiterschleife abgerieben und dadurch schließlich unterbrochen wird, nachdem der Verschleiß ein drittes Maß erreicht hat. Es ist denkbar, daß mehrere Leiterschleifen versetzt hintereinander angeordnet werden, so daß entsprechend viele Stufen des Verschleißes des Reibbelags erfaßt werden können.

Der Verschleißsensor befindet sich in einem sogenannten Hochtemperaturbereich der Scheibenbremse, in dem Temperaturen von über 600°C auftreten können. Aus diesem Grund sind die in dem Verschleißsensor vorhandenen Konstruktionsmaterialen (Leiter und Isolatoren) für solche Temperaturbereiche ausgelegt. Neben den metallischen Leitern werden vorzugsweise keramische Bauteile und Vergußmassen eingesetzt. Eine vorteilhafte Weiterbildung der erfindungsgemäßen Scheibenbremsanordnung ist dadurch gekennzeichnet, daß das Bremssattelgehäuseelement ein die Bremsbeläge und die Bremsscheibe überdeckendes Abdeckblech umfaßt. Das Abdeckblech weist eine den Bremsbelägen und der Bremsscheibe sowie den Zwischenräumen zugewandte Fläche und eine abgewandte Fläche auf und bildet eine thermische Abschirmung, so daß auf der den Zwischenräumen abgewandten Seite die Zuleitungen der Verschleißsensoren mit üblichen Zuleitungen (Kabeln) verbunden werden können, die den Hochtemperaturanforderungen im Zwischenraum nicht genügen würden. Unter einem Abdeckblech im Sinne dieser Weiterbildung soll jede metallische Konstruktion verstanden werden, die aufgrund einer ausreichenden Fläche und thermischen Ankopplung die Funktion einer thermischen Abschirmung erfüllen kann. Beispielsweise kann ein entsprechend breiter und dicker Bügel zum Niederhalten von Haltefedern der Bremsbeläge diesen Zweck erfüllen.

Bei einer vorteilhaften Weiterbildung der erfindungsgemäßen Anordnung ist der Verschleißsensor lösbar an dem Bremssattelgehäuseelement befestigt. Beispielsweise ist der Verschleißsensor an dem Gehäuseelement angeklemmt. Dies gestattet ein einfaches Auswechseln des Verschleißsensors sowohl bei Erneuerung des Bremsbelags als auch bei einem Ausfall des Sensors.

Eine bevorzugte Weiterbildung der erfindungsgemäßen Scheibenbremsanordnung ist dadurch gekennzeichnet, daß in dem Sensorkopf zusätzlich ein Temperatursensor enthalten ist. Dieser ermöglicht die Erfassung der Bremsentemperatur, wobei die den Verschleiß anzeigenden Ausgangssignale des Verschleißsensors mit den Ausgangssignalen des Temperatursensors verknüpft werden können. Der Temperatursensor kann ohne großen Mehraufwand in den Verschleißsensor integriert werden. Beispielsweise können die im Verchleißsensor bereits enthaltenen elektrischen Leiter so ausgebildet werden, daß sie gleichzeitig als Temperatursensor dienen. Wenn in dem Verschleißsensor beispielsweise eine (dem Abrieb auszusetzende) Leiterschleife enthalten ist, könnte ein Teil dieser Leiterschleife als PTC/NTC-Widerstand ausgebildet werden. Bei einer bevorzugten Ausführungsform wird der Temperatursensor als preiswertes Thermoelement ausgebildet, indem beispielsweise zwei Zuleitungen aus unterschiedlichen Metallen bis in den Sensorkopf geführt und dort miteinander verbunden werden (beispielsweise eine Eisen-Konstantan-Paarung). Der Temperatursensor ist beispielsweise in einer Leiterschleife aus einer ein Thermoelement bildenden Drahtpaarung aus zwei Drähten unterschiedlichen Materials gebildet oder umfaßt eine Leiterschleife aus einem metallischen Gehäuse des Verschleißsensors und einem darin geführten und am Sensorkopf mit dem Gehäuse verbundenen Draht, die zusammen ein Thermoelement bilden.

Vorteilhafte und bevorzugte Weiterbildungen sind in den Unteransprüchen gekennzeichnet.

Im folgenden wird die Erfindung anhand einer in den Zeichnungen dargestellten bevorzugten Ausführungsform näher beschrieben. In den Zeichnungen zeigen:
Figur 1 eine schematische Darstellung der erfindungsgemäßen Scheibenbremsanordnung;
Figur 2 eine schematische Darstellung einer bevorzugten Ausführungsform eines bei der Erfindung verwendeten Verschleißsensors,
Figuren 3A bis 5B schematische Darstellungen eines Abschnitts der erfindungsgemäßen Scheibenbremsanordnung bei verschiedenen Verschleißgraden des Reibbelags (jeweils in Ruhe und während des Bremsvorgangs); und
Figur 6 eine schematische Darstellung, die die Anordnung des Verschleißsensors, insbesondere die Anordnung des Sensorkopfs in einer Ausnehmung des Reibbelags zeigt.

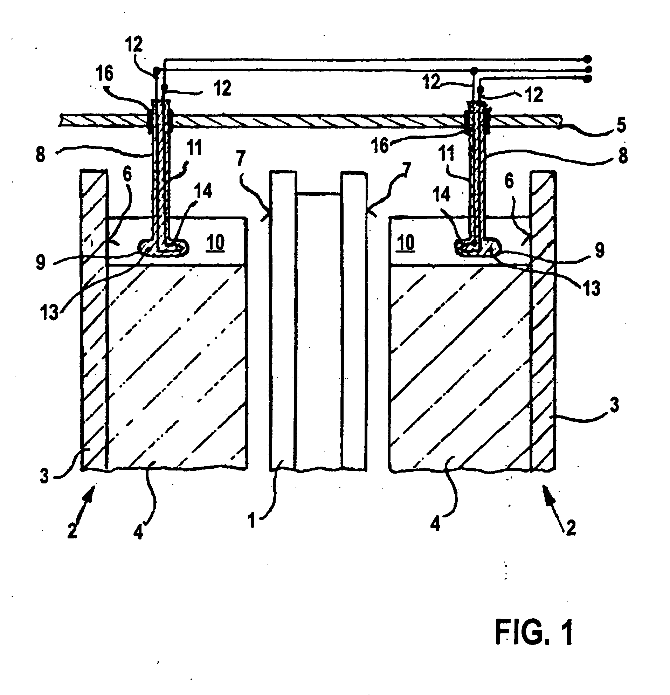

Figur 1 zeigt eine schematische, teilweise geschnittene Darstellung eines Teils der erfindungsgemäßen Scheibenbremsanordnung. Eine Bremsscheibe 1 ist zwischen zwei Bremsbelägen 2 angeordnet. Jeder Bremsbelag 2 weist einen auf einem Belagträger 3 aufgebrachten Reibbelag 4 auf. Während eines Bremsvorgangs werden die Bremsbeläge 2 auf die Bremsscheibe 1 zubewegt, bis die Reibseiten der Reibbeläge 4 auf den Oberflächen 7 der Bremsscheibe 1 reiben. Dabei nutzen sich die Reibbeläge 4 ab. In den in Figur 1 oben dargestellten Seitenflächen der Reibbeläge 4 sind Ausnehmungen 10 eingebracht, wobei in Figur 1 die Schnittdarstellung so gewählt wurde, daß die Schnittebenen innerhalb der Ausnehmungen 10 liegen, so daß bei der Darstellung in Figur 1 der geschnittene Bereich des Reibbelags 4 am Boden der Ausnehmung endet. Die in Figur 1 beispielhaft dargestellte Ausnehmung 10 hat die Form einer Nut, die sich durch die gesamte Dicke des Reibbelags 4 ausgehend von der reibbelagseitigen Oberfläche 6 des Belagträgers 3 bis zur Reibseite des Reibbelags 4 erstreckt.

Jedem Bremsbelag 2 ist ein elektro-mechanischer Verschleißsensor 8 zugeordnet. Der Verschleißsensor 8 weist eine Sensorhalterung 11 und einen Sensorkopf 9 auf und ist derart an einem Bremssattelgehäuseelement 5, beispielsweise einem Bügel für Haltefedern, befestigt, daß er mit dem Sensorkopf 9 in die Nut 10 hineinragt, die einen Zwischenraum zwischen der belagseitigen Oberfläche 6 des Belagträgers und der Oberfläche 7 der Bremsscheibe 1 bildet. Die Anordnung des Sensorkopfs 9 in der Ausnehmung 10 ist dabei so gewählt, daß der Sensorkopf einen geringen Abstand zur belagseitigen Oberfläche 6 des Belagträgers 3 hat oder diesen sogar berührt. Dadurch wird gewährleistet, daß der Sensorkopf 9 mit der Oberfläche 7 der Bremsscheibe 1 erst dann in Berührung kommt, wenn der Verschleiß des Reibbelags 4 ein Ausmaß erreicht hat, bei dem die Restdikke des Reibbelags der Ausdehnung des Sensorkopfs 9 in der Zuspannrichtung entspricht.

Bei der in Figur 1 gezeigten Ausführungsform ist innerhalb des Verschleißsensors 8 eine von einem Isolatormaterial 13 umhüllte Drahtschleife 14 angeordnet, wobei die Drahtschleife eine Spitze aufweist, die in einem der Bremsscheibe 1 zugewandten Bereich des Sensorkopfs 9 angeordnet ist. Die beiden Enden der Drahtschleife 14 sind oberhalb der Befestigung 16 in dem Bremssattelgehäuseelement 5 als Anschlüsse 12 herausgeführt. Da sich die Anschlüsse 12 oberhalb des als thermische Abschirmung wirkenden Elements 5 befinden, können normale Anschlußzuleitungsdrähte mit den Anschlüssen 12 verbunden werden.

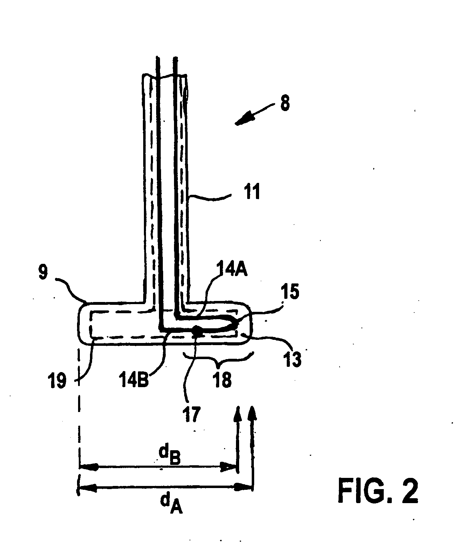

Figur 2 zeigt eine schematische Schnittansicht des unteren Teils des bei der Erfindung verwendeten Verschleißsensors 8. Es ist ein Teil der Sensorhalterung 11 dargestellt, an deren unteren Ende sich der Sensorkopf 9 befindet. Der Sensorkopf 9 hat in der Zuspannrichtung die Ausdehnung d_{A}, die bestimmt, bei welchem Grad der Abnutzung des Reibbelags 4 ein Abreiben der der Bremsscheibe 1 zugewandten Oberfläche des Sensorkopfs 9 einsetzt. In dem Sensorkopf ist eine Leiterschleife 14A, 14B angeordnet, deren Zuleitungen durch die Sensorhalterung 11 hindurch zu den (in Figur 2 nicht gezeigten) Anschlüssen 12 geführt sind. Die Leiterschleife besteht aus einer ersten Zuleitung 14A und einer zweiten Zuleitung 14B, die an einem Punkt 17 miteinander verbunden sind. Die erste Zuleitung 14A weist eine Schleifenspitze 15 auf, die in Richtung auf die Bremsscheibe 1 am weitesten vorragt. Die gesamte Leiterschleife (14A, 15, 17, 14B) ist von einem Isolatormaterial umgeben. Wenn der Sensorkopf 9 an der Oberfläche der Bremsscheibe 1 abgerieben wird, so wird zunächst das die Leiterschleifenspitze 15 bedeckende Isoliermaterial 13 abgerieben, bis schließlich die Oberfläche der Leiterschleifenspitze 15 freigelegt ist. Die sich dann ergebende Restausdehnung d_{B} des Sensorkopfs 9 bestimmt somit die verbleibende Restdicke des Reibbelags 4, bei der die Oberfläche der Leiterschleife die Oberfläche der Bremsscheibe 1 berühren kann. Von dieser Berührung kann ein erstes Ausgangssignal des Sensors abgeleitet werden. Wird der Bremsbelag anschließend weiterbenutzt, so führt das weitere Abreiben des Reibbelags zum gleichzeitigen Abreiben des Leitermaterials der Leiterschleife 15, bis diese unterbrochen ist. Daraus kann ein zweites Sensorausgangssignal abgeleitet werden. Beispielsweise könnte die Leiterschleife des Verschleißsensors 8 mit einem Konstantstrom beaufschlagt und eine Spannungsmessung vorgenommen werden.

Bei dem in Figur 2 gezeigten Ausführungsbeispiel besteht die Leiterschleife 14 aus einem ersten Abschnitt 14A und einem zweiten Abschnitt 14B, die in einem Punkt 17 miteinander verbunden sind. Bei der bevorzugten Ausführungsform als Thermoelement ist der Abschnitt 14A aus einem ersten Metall und der Abschnitt 14B aus einem zweiten Metall hergestellt (beispielsweise ein Abschnitt aus Eisen und der andere aus Konstantan). Die Verbindungsstelle 17 befindet sich an einem Ort, an dem die Temperatur gemessen werden soll. Wie in Figur 2 dargestellt, braucht die Verbindungsstelle 17 sich nicht an dem der Bremsscheibe 1 zugewandten Schleifenabschnitt 15 zu befinden. Es kann von Vorteil sein, die Verbindungsstelle 17 an der in Figur 2 gezeigten Stelle anzuordnen, da bei einer solchen Anordnung die Temperaturmessung auch dann noch möglich ist, wenn die Zuleitung 14A im Bereich 15 fast vollständig durchtrennt ist. Zudem ist es einfacher, den Leiterabschnitt 14A in einem definierten Abstand (d_{A} - d_{B}) von der äußeren Oberfläche des Sensorkopfs 9 im Bereich 18 anzuordnen als dies bei einer Anordnung der Verbindungsstelle 17 möglich wäre.

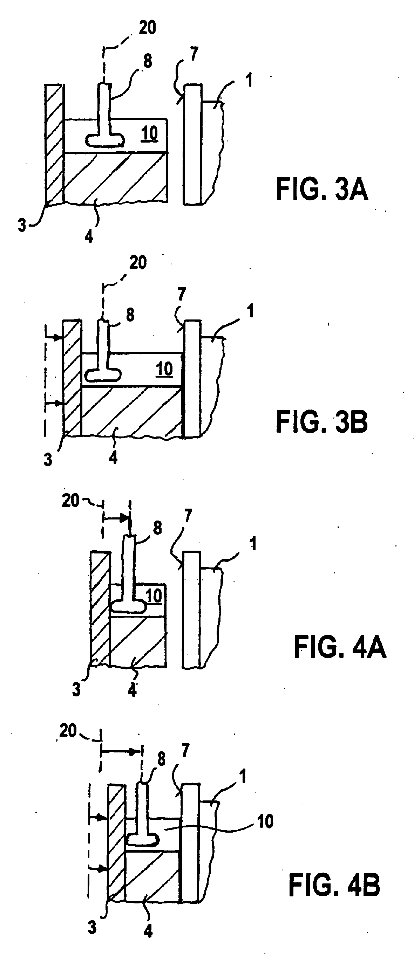

Die Figuren 3A, 3B, 4A, 4B, 5A und 5B zeigen schematisch einen Ausschnitt der erfindungsgemäßen Scheibenbremsanordnung in verschiedenen Stufen der Abnutzung des Reibbelags 4, wobei die Figuren 3A, 4A und 5A jeweils den Ruhezustand und die Figuren 3B, 4B und 5B jeweils den Zustand während des Bremsvorgangs darstellen. Figuren 3A und 3B zeigen den frischen, noch nicht abgenutzten Reibbelag 4 auf dem Belagträger 3 in Anordnung neben der Bremsscheibe 1. Der Verschleißsensor 8 taucht in die Ausnehmung 10 ein. Der Verschleißsensor 8 ist flexibel (d.h. beweglich bzw. auslenkbar) an einem (in den Figuren nicht dargestellten) Bremssattelgehäuseelement befestigt. Die Ruheposition oder Ausgangsposition des Verschleißsensors 8 ist durch die gestrichelte Linie 20 angedeutet. Während des Bremsvorgangs (Figur 3B) verschiebt sich der Belagträger 3 mit Reibbelag 4 in Richtung der Bremsscheibe 1, bis die Reibseite des Reibbelags 4 die Oberfläche 7 berührt. Der Verschleißsensor 8 bewegt sich bei der in Figur 3B dargestellten beispielhaften Positionierung nicht. Selbstverständlich sind andere Ausführungsformen denkbar, bei denen der Verschleißsensor 8 von Anfang an an dem Belagträger 3 anliegt und mit diesem mitbewegt wird.

Die Figuren 4A und 4B stellen dieselbe Anordnung dar, nachdem der Reibbelag 4 erheblich abgenutzt ist, aber noch nicht seinen maximalen Verschleiß erreicht hat. Die Belagträgerplatte 3 wird in ihrer Ausgangsposition (Figur 4A) dem zunehmenden Verschleiß des Reibbelags 4 nachgeregelt, wie dies bei Scheibenbremsen üblich ist und hier nicht näher erörtert werden soll. Wie es in Figur 4A dargestellt ist, liegt der Verschleißsensor 8 innerhalb der Ausnehmung 10 an der Belagträgerplatte 3 an und ist bereits in der Ausgangsposition aus seiner Ruheposition 20 ausgelenkt. Dies wird durch seine flexible Befestigung ermöglicht. Während des Bremsvorgangs (Figur 4B) wird er noch weiter in Richtung der Bremsscheibe 1 ausgelenkt.

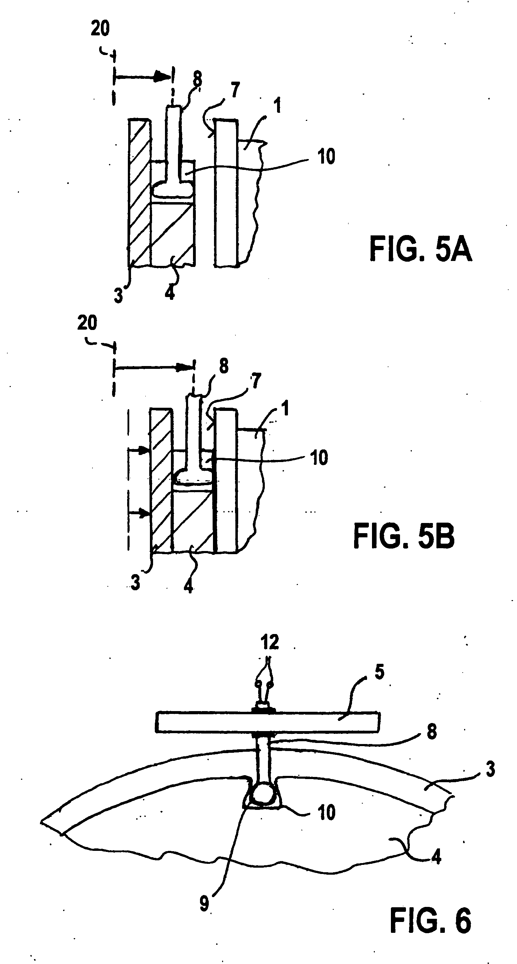

Figuren 5A und 5B zeigen dieselbe Anordnung bei Erreichen eines ersten Maßes des Verschleißes, bei dem die Restdicke des Reibbelags 4 die der Ausdehnung des Sensorkopfs des Verschleißsensors 8 entsprechende Minimaldicke erreicht hat. In der Ruheposition liegt der Verschleißsensor 8 an der Belagträgerplatte 3 an, wobei seine der Bremsscheibe 1 zugewandte Fläche mit der Reibseite des Reibbelags 4 fluchtet. Während des Bremsvorgangs (Figur 5B) reibt die Oberfläche 7 der Bremsscheibe 1 nicht nur am Reibbelag 4, sondern auch an der Oberfläche des Verschleißsensors 8, wodurch dieser in diesem Bereich abgerieben wird.

Figur 6 zeigt eine schematische Ansicht eines Teils des Bremsbelags aus Richtung der Bremsscheibe. Der an dem Bremssattelgehäuseelement 5 flexibel befestigte Verschleißsensor 8 taucht in die Ausnehmung 10 des Reibbelags 4 ein. Die Ausnehmung 10 hat die Form einer sich über die gesamte Dicke des Reibbelags 4 erstreckenden Nut, wobei die Nut sich zum Boden hin erweitert. Der Sensorkopf 9 des Verschleißsensors 8 hat eine Maximalbreite, die größer ist als die Breite der Nut 10 an ihrem äußeren Rand, so daß der Sensorkopf nicht seitlich aus der Nut 10 herausgezogen, sondern lediglich entlang der Nut bewegt werden kann. Diese Anordnung sorgt dafür, daß der Sensorkopf 9 stets in der Nut 10 in der gewünschten Orientierung zur Bremsscheibe gehalten wird.

Im Rahmen des Erfindungsgedankens sind zahlreiche alternative Ausführungsformen denkbar. Beispielsweise könnte der Sensorkopf 9 derart rotationssymmetrisch ausgebildet sein, daß er seine Funktion in jeder beliebigen Einbaulage erfüllen kann. Anstelle des T-förmigen Verschleißsensors 8, wie er in den Figuren 1 bis 5 dargestellt ist, kann auch ein L-förmiger Verschleißsensor Anwendung finden, wobei der kurze Schenkel des L den Sensorkopf bildet und auf die Bremsscheibe 1 weist. Bei alternativen Ausführungsformen ist es auch denkbar, für jeden Bremsbelag mehrere Verschleißsensoren der genannten Art einzusetzen.

## Patentansprüche

1. Scheibenbremsanordnung mit einer Bremsscheibe (1) und einem Bremssattel mit zwei auf die Bremsscheibe (1) einwirkenden Bremsbelägen (2), die jeweils einen auf einem Belagträger (3) aufgebrachten Reibbelag (4) mit einer Reibseite umfassen, und einem Bremssattelgehäuseelement (5),
wobei zwischen einer mit dem Belagträger (3) verbundenen und der Bremsscheibe (1) zugewandten Oberfläche (6) und der der Reibseite des Reibbelags (4) zugewandten Oberfläche (7) der Bremsscheibe (1) ein den Verschleiß des Reibbelags (4) erfassender elektro-mechanischer Verschleißsensor (8) angeordnet ist,
wobei der Verschleißsensor (8) an dem Bremssattelgehäuseelement (5) derart befestigt ist, daß er mit einem Sensorkopf (9) in einen Zwischenraum zwischen der mit dem Belagträger (3) verbundenen und der Bremsscheibe (1) zugewandten Oberfläche (6) und der der Reibseite zugewandten Oberfläche (7) der Bremsscheibe (1) eintaucht, ohne an dem Bremsbelag (2) befestigt zu sein,
wobei der Sensorkopf (9) eine vorgegebene Ausdehnung in Zuspannrichtung einnimmt und über eine flexible Sensorhalterung (11) an dem Bremssattelgehäuseelement (5) befestigt ist, so daß der Sensorkopf (9) in Zuspannrichtung auslenkbar ist und während des Bremsvorgangs von der mit dem Belagträger (3) verbundenen und der Bremsscheibe (1) zugewandten Oberfläche (6) gegen die der Reibseite zugewandte Oberfläche (7) der Bremsscheibe (1) gedrückt wird, sobald der Verschleiß des Reibbelags (4) ein erstes Maß erreicht hat.

2. Scheibenbremsanordnung nach Anspruch 1, **dadurch gekennzeichnet, daß** die flexible Sensorhalterung (11) einen biegeelastischen Stab oder einen flexiblen Draht umfaßt, der an seinem einen Ende an dem Bremssattelgehäuseelement (5) befestigt ist und an seinem anderen Ende den Sensorkopf (9) trägt.

3. Scheibenbremsanordnung nach einem der Ansprüche 1 - 2, **dadurch gekennzeichnet, daß** der Verschleißsensor (8) an dem Bremssattelgehäuseelement (5) derart befestigt ist, daß der Sensorkopf (9) in einer vorgegebenen Orientierung zur Bremsscheibe (1) gehalten wird.

4. Scheibenbremsanordnung nach nach Anspruch 3, **dadurch gekennzeichnet, daß** der Sensorkopf (9) in eine vorhandene Ausnehmung (10) des Reibbelags (4) eintaucht.

5. Scheibenbremsanordnung nach Anspruch 4, **dadurch gekennzeichnet, daß** die Ausnehmung (10) eine seitlich in den Reibbelag (4) eingebrachte Bohrung ist, wobei die mit dem Belagträger (3) verbundene und der Bremsscheibe (1) zugewandte Oberfläche (6) von der belagträgerseitigen Begrenzungsfläche der Bohrung gebildet wird.

6. Scheibenbremsanordnung nach Anspruch 4, **dadurch gekennzeichnet, daß** die Ausnehmung eine den Reibbelag (4) in seiner gesamten Dicke durchlaufende Nut (10) ist, die auf einer Seite von Belagträger (3) begrenzt ist, wobei die mit dem Belagträger (3) verbundene und der Bremsscheibe (1) zugewandte Oberfläche (6) von dem dem Reibbelag (4) zugewandten Belagträgeroberfläche gebildet wird.

7. Scheibenbremsanordnung nach Anspruch 6, **dadurch gekennzeichnet, daß** der Sensorkopf (9) in einer Bewegungsrichtung senkrecht zu der dem Reibbelag (4) zugewandten Oberfläche () der Bremsscheibe (1) von der Nut (10) geführt wird, indem die Breite des Sensorkopfs (9) an die Breite der Nut (10) angepaßt ist.

8. Scheibenbremsanordnung nach Anspruch 7, **dadurch gekennzeichnet, daß** die Nut (10) sich zum Boden hin erweitert und das Querschnittsprofil des Sensorkopfs (9) derart an die Form der Nut (10) angepaßt ist, daß der Sensorkopf (9) nur in der Längsrichtung der Nut (10) bewegbar ist.

9. Scheibenbremsanordnung nach einem der Ansprüche 3 - 8, **dadurch gekennzeichnet, daß** der Sensorkopf (9) einen der Bremsscheibe (1) zugewandten Bereich (18) aufweist, der während des Bremsvorgangs durch einen Kontakt zu der Bremsscheibe (1) abgerieben wird, nachdem der Verschleiß des Reibbelags (4) das erste Maß erreicht hat.

10. Scheibenbremsanordnung nach Anspruch 9, **dadurch gekennzeichnet, daß** sich eine erfaßbare Sensoreigenschaft aufgrund des Abreibens des Bereichs (18) ändert, wenn der Verschleiß des Reibbelags (4) ein zweites Maß erreicht hat.

11. Scheibenbremsanordnung nach Anspruch 10, **dadurch gekennzeichnet, daß** sich ein Stromfluß durch den Verschleißsensor (8) ändert, wenn der Verschleiß das zweite Maß erreicht hat.

12. Scheibenbremsanordnung nach Anspruch 10, **dadurch gekennzeichnet, daß** das erste und das zweite Maß verschieden sind.

13. Scheibenbremsanordnung nach Anspruch 12, **dadurch gekennzeichnet, daß** sich ein Widerstand zwischen zwei Anschlüssen (12) des Verschleißsensors (8) ändert, wenn der Verschleiß das zweite Maß erreicht hat.

14. Scheibenbremsanordnung nach Anspruch 13, **dadurch gekennzeichnet, daß** der Sensorkopf (9) eine von einer Isolatorschicht (13) umhüllte Leiterschleife (14) enthält, wobei die Leiterschleife (14) so angeordnet ist, daß zunächst die Isolatorschicht (13) abgerieben wird, nachdem der Verschleiß das erste Maß erreicht hat, und dann ein Teil der Leiterschleife (14) abgerieben und dadurch schließlich unterbrochen wird, nachdem der Verschleiß das zweite Maß erreicht hat.

15. Scheibenbremsanordnung nach Anspruch 14, **dadurch gekennzeichnet, daß** der Sensorkopf (9) wenigstens eine weitere Leiterschleife aufweist, die so angeordnet ist, daß ein Teil der weiteren Leiterschleife abgerieben und dadurch schließlich unterbrochen wird, nachdem der Verschleiß ein drittes Maß erreicht hat.

16. Scheibenbremsanordnung nach einem der Ansprüche 1 bis 15, **dadurch gekennzeichnet, daß** das Bremssattelgehäuseelement (5) ein die Bremsbeläge (2) und die Bremsscheibe (1) überdekkendes Abdeckblech umfaßt.

17. Scheibenbremsanordnung nach einem der Ansprüche 1 15, **dadurch gekennzeichnet, daß** das Bremssattelgehäuseelement (5) den Spalt zwischen dem Belagträger (3) und der Bremsscheibe (1) überragt.

18. Scheibenbremsanordnung nach Anspruch 17, **dadurch gekennzeichnet, daß** das Bremssattelgehäuseelement ein Bügel ist.

19. Scheibenbremsanordnung nach einem der Ansprüche 1 - 18, **dadurch gekennzeichnet, daß** der Verschleißsensor (8) lösbar an dem Bremssattelgehäuseelement (5) befestigt ist.

20. Scheibenbremsanordnung nach einem der Ansprüche 1 - 19, **dadurch gekennzeichnet, daß** in dem Sensorkopf (9) zusätzlich ein Temperatursensor enthalten ist.

21. Scheibenbremsanordnung nach Anspruch 20, **dadurch gekennzeichnet, daß** der Temperatursensor in einer Leiterschleife aus einer ein Thermoelement bildenden Drahtpaarung aus zwei Drähten unterschiedlichen Materials gebildet ist.

22. Scheibenbremsanordnung nach Anspruch 20, **dadurch gekennzeichnet, daß** der Temperatursensor ein Thermoelement umfaßt, das von einem metallischen Gehäuse des Verschleißsensors und einem darin geführten und am Sensorkopf mit dem Gehäuse verbundenen Draht unterschiedlichen Materials gebildet wird.

## Claims

1. Disc brake arrangement with a brake disc (1) and a brake calliper with two brake linings (2), which act on the brake disc (1) and which each comprise a friction lining (4), mounted on a lining carrier (3), with a friction side, and a brake calliper housing element (5), wherein an electromechanical wear sensor (8) detecting wear of the brake lining (4) is arranged between a surface (6), which is connected with the lining carrier (3) and faces the brake disc (1), and the surface (7), which faces the friction side of the friction lining (4), wherein the wear sensor (8) is fastened to the brake calliper housing element (5) in such a manner that it enters by a sensor head (9) into an intermediate space between the surface (6) connected with the lining carrier (3) and facing the brake disc (1) and the surface (7) of the brake disc (1) facing the friction side, without being fastened to the brake lining (2), wherein the sensor head (9) occupies a predetermined dimension in brake application direction and is fastened to the brake calliper housing element (5) by way of a flexible sensor mount (11) so that the sensor head (9) is deflectable in brake application direction and during the braking process is pressed by the surface (6), which is connected with the lining carrier (3) and faces the brake disc (1), against the surface (7) of the brake disc (1) facing the friction side as soon as the wear of the friction lining (4) has attained a first dimension.

2. Disc brake arrangement according to claim 1, **characterised in that** the flexible sensor mount (11) comprises a rod resilient in bending or a flexible wire, which is fastened at one end thereof to the brake calliper housing element (5) and carries the sensor head (9) at the other end thereof.

3. Disc brake arrangement according to one of claims 1 and 2, **characterised in that** the wear sensor (8) is fastened to the brake calliper housing element (5) in such a manner that the sensor head (9) is held in a predetermined orientation relative to the brake disc (1).

4. Disc brake arrangement according to claim 3, **characterised in that** the sensor head (9) enters into an existing recess (10) of the friction lining (4).

5. Disc brake arrangement according to claim 4, **characterised in that** the recess (10) is a bore formed laterally in the friction lining (4), wherein the surface (6) connected with the lining carrier (3) and facing the brake disc (1) is formed by the boundary surface, which is at the lining carrier side, of the bore.

6. Disc brake arrangement according to claim 4, **characterised in that** the recess is a groove (10) which runs through the friction lining (4) in its entire thickness and which is bounded on one side by the lining carrier (3), wherein the surface (6) connected with the lining carrier (3) and facing the brake disc (1) is formed by the lining carrier surface facing the friction lining (4).

7. Disc brake arrangement according to claim 6, **characterised in that** the sensor head (9) is guided in a movement direction perpendicular to the surface (), which faces the friction lining (4), of the brake disc (1) by the groove (10) **in that** the width of the sensor head (9) is adapted to the width of the groove (10).

8. Disc brake arrangement according to claim 7, **characterised in that** the groove (10) widens towards the base and the cross-sectional profile of the sensor head (9) is adapted to the shape of the groove (10) in such a manner that the sensor (9) is movable only in the longitudinal direction of the groove (10).

9. Disc brake arrangement according to any one of claims 3 to 8, **characterised in that** the sensor head (9) has a region (18) which faces the brake disc (1) and which during the braking process is abraded by a contact with the brake disc (1) after the wear of the brake lining (4) has attained the first dimension.

10. Disc brake arrangement according to claim 9, **characterised in that** a detectable sensor characteristic changes by virtue of the abrasion of the region (18) when the wear of the brake lining (4) has attained a second dimension.

11. Disc brake arrangement according to claim 10, **characterised in that** a current flow through the wear sensor (8) changes when the wear has attained the second dimension.

12. Disc brake arrangement according to claim 10, **characterised in that** the first dimension and second dimension are different.

13. Disc brake arrangement according to claim 12, **characterised in that** a resistance between two connections (12) of the wear sensor (8) changes when the wear has attained the second dimension.

14. Disc brake arrangement according to claim 13, **characterised in that** the sensor head (9) includes a conductor loop (14) encased by an insulating layer (13), wherein the conductor loop (14) is so arranged that initially the insulating layer (13) is abraded after the wear has attained the first dimension and then a part of the conductor loop (14) is abraded and thereby finally interrupted after the wear has attained the second dimension.

15. Disc brake arrangement according to claim 14, **characterised in that** the sensor head (9) comprises at least one further conductor loop which is so arranged that a part of the further conductor loop is abraded and thereby finally interrupted after the wear has attained a third dimension.

16. Disc brake arrangement according to any one of claims 1 to 15, **characterised in that** the brake calliper housing element (15) comprises a cover plate covering the brake linings (2) and the brake disc (1).

17. Disc brake arrangement according to any one of claims 1 to 15, **characterised in that** the brake calliper housing element (5) projects over the gap between the lining carrier (3) and the brake disc (1).

18. Disc brake arrangement according to claim 17, **characterised in that** the brake calliper housing element is a yoke.

19. Disc brake arrangement according to any one of claims 1 to 18, **characterised in that** the wear sensor (8) is detachably fastened to the brake calliper housing element (5).

20. Disc brake arrangement according to any one of claims 1 to 19, **characterised in that** a temperature sensor is additionally included in the sensor head (9).

21. Disc brake arrangement according to claim 20, **characterised in that** the temperature sensor is formed in a conductor loop of a wire pair, which forms a thermoelement, of two wires of different material.

22. Disc brake arrangement according to claim 20, **characterised in that** the temperature sensor comprises a thermoelement which is formed by a metallic housing of the wear sensor and a wire, which is guided therein and connected at the sensor head with the housing, of different material.

## Revendications

1. Système de frein à disque, comportant un disque de frein (1) et un étrier de frein avec deux plaquettes de frein (2) agissant sur le disque de frein (1), qui comprennent chacune une garniture de friction (4) montée sur un support de garniture (3) et présentant une face de friction, et comportant un élément de carter d'étrier de frein (5)
un capteur d'usure (8) électro-magnétique détectant l'usure de la garniture de friction (4) étant disposé entre une surface (6) reliée au support de garniture (3) et orientée vers le disque de frein (1) et la surface (7) du disque de frein (1) orientée vers la face de friction de la garniture de friction (4),
le capteur d'usure (8) étant fixé à l'élément de carter d'étrier de frein (5) de telle manière qu'il pénètre par une tête de capteur (9) dans un espace intermédiaire entre la surface (6) reliée au support de garniture (3) et orientée vers le disque de frein (1) et la surface (7) du disque de frein (1) orientée vers la face de friction, sans être fixé à la plaquette de frein (2),
la tête de détection (9) occupant une étendue prédéterminée dans le sens de l'application du frein, et étant fixée à l'élément de carter d'étrier de frein (5) par l'intermédiaire d'un support de capteur flexible (11), de sorte que la tête de capteur (9) est orientable dans le sens de l'application du frein et qu'elle est, pendant le processus de freinage, poussée par la surface (6) reliée au support de garniture (3) et orientée vers le disque de frein (1) contre la surface (7) du disque de frein (1) orientée vers la face de friction, dès que l'usure de la garniture de friction (4) a atteint une première valeur.

2. Système de frein à disque selon la revendication 1, **caractérisé en ce que** le support de capteur flexible (11) comprend une barre élastique en flexion ou un fil flexible qui est fixé à l'une de ses extrémités, à l'élément de carter d'étrier de frein (5), et qui porte la tête de capteur (9) à son autre extrémité.

3. Système de frein à disque selon une des revendications 1 et 2, **caractérisé en ce que** le capteur d'usure (8) est fixé à l'élément de carter d'étrier de frein (5) de telle manière que la tête de capteur (9) est maintenue dans une orientation prédéfinie par rapport au disque de frein (1).

4. Système de frein à disque selon la revendication 3, **caractérisé en ce que** la tête de capteur (9) pénètre dans un évidement (10) existant de la garniture de friction (4).

5. Système de frein à disque selon la revendication 4, **caractérisé en ce que** l'évidement (10) est un orifice pratiqué dans la garniture de friction (4), la surface (6) reliée au support de garniture (3) et orientée vers le disque de frein (1) étant formée par la surface de délimitation de l'orifice côté support de garniture.

6. Système de frein à disque selon la revendication 4, **caractérisé en ce que** l'évidement est une rainure (10) continue sur toute l'épaisseur de la garniture de friction (4), et qui est limitée sur un côté par le support de garniture (3), la surface reliée au support de garniture (3) et orientée vers le disque de frein (1) étant formée par la surface du support de garniture orientée vers la garniture de friction (4).

7. Système de frein à disque selon la revendication 6, **caractérisé en ce que** la tête de capteur (9) est guidée par la rainure (10) dans une direction de déplacement perpendiculaire à la surface () du disque de frein (1) orientée vers la garniture de friction (4), la largeur de la tête de capteur (9) étant adaptée à la largeur de la rainure (10).

8. Système de frein à disque selon la revendication 7, **caractérisé en ce que** la rainure (10) s'élargit en direction du fond et **en ce que** le profil de section transversale de la tête de capteur (9) est adapté à la forme de la rainure (10) de telle manière que la tête de capteur (9) ne peut se déplacer que dans la direction longitudinale de la rainure (10).

9. Système de frein à disque selon une des revendications 3 à 8, **caractérisé en ce que** la tête de capteur (9) présente une zone (18) orientée vers le disque de frein (1) qui est abrasée pendant le processus de freinage par un contact avec le disque de frein (1), une fois que l'usure de la garniture de friction (4) a atteint la première valeur.

10. Système de frein à disque selon la revendication 9, **caractérisé en ce qu'**une caractéristique détectable du détecteur change en raison de l'abrasion de la zone (18) lorsque l'usure de la garniture de friction (4) a atteint une deuxième valeur.

11. Système de frein à disque selon la revendication 10, **caractérisé en ce qu'**un courant électrique est modifié par le capteur d'usure (8) lorsque l'usure a atteint la deuxième valeur.

12. Système de frein à disque selon la revendication 10, **caractérisé en ce que** la première valeur et la deuxième valeur sont différentes.

13. Système de frein à disque selon la revendication 12, **caractérisé en ce qu'**une résistance entre deux raccordements (12) du capteur d'usure (8) change lorsque l'usure a atteint la deuxième valeur.

14. Système de frein à disque selon la revendication 13, **caractérisé en ce que** la tête de capteur (9) contient une boucle conductrice enveloppée par une couche isolante (13), la bouche conductrice (14) étant disposée de telle manière que la couche isolante (13) est abrasée en premier lieu, une fois que l'usure a atteint la première valeur, et qu'une partie de la boucle conductrice (14) est ensuite abrasée, puis de ce fait rompue, après que l'usure a atteint la deuxième valeur.

15. Système de frein à disque selon la revendication 14, **caractérisé en ce que** la tête de capteur (9) présente au moins une autre boucle conductrice, qui est disposée de telle manière qu'une partie de l'autre boucle conductrice est abrasée, puis de ce fait rompue, après que l'usure a atteint une troisième valeur.

16. Système de frein à disque selon les revendications 1 à 15, **caractérisé en ce que** l'élément de carter d'étrier de frein (5) comprend une tôle de couverture qui recouvre les plaquettes de frein (2) et le disque de frein (1).

17. Système de frein à disque selon une des revendications 1 à 15, **caractérisé en ce que** l'élément de carter d'étrier de frein (5) dépasse de l'interstice entre le support de garniture (3) et le disque de frein (1).

18. Système de frein à disque selon la revendication 17, **caractérisé en ce que** l'élément de carter d'étrier de frein est un étrier.

19. Système de frein à disque selon une des revendications 1 à 18, **caractérisé en ce que** le capteur d'usure (8) est fixé de manière amovible à l'élément de carter d'étrier de frein (5).

20. Système de frein à disque selon une des revendications 1 à 19, **caractérisé en ce que** la tête de capteur (9) contient en plus un capteur de température.

21. Système de frein à disque selon la revendication 20, **caractérisé en ce que** le capteur de température est formé dans une boucle conductrice à partir d'une paire de fils formant un élément thermique formée de deux fils constitués d'un matériau différent.

22. Système de frein à disque selon la revendication 20, **caractérisé en ce que** le capteur de température comprend un élément thermique, qui est formé d'un carter métallique du capteur d'usure et d'un fil formé d'un matériau différent passé à l'intérieur et relié à la tête de capteur par le carter.
